# FASCICULE DE BREVET EUROPEEN

(11) **EP 3 714 681 B1**
(45) Date de publication et mention de la délivrance du brevet: **24.11.2021**
(21) Numéro de dépôt: 20165779.8
(22) Date de dépôt: 26.03.2020
(51) Int. Cl.: A01G 9/02, A01G 27/02

(54) **RÉCEPTACLE POUR LA CULTURE DES PLANTES**
BEHÄLTER FÜR DEN ANBAU VON PFLANZEN
CONTAINER FOR GROWING PLANTS

(30) Priorité: 28.03.2019 FR 1903265
(43) Date de publication de la demande: 30.09.2020
(73) Titulaire: Jardian Case, 85530 La Bruffière (FR)
(72) Inventeur: LEBOEUF, Philippe, 85530 La Bruffière (FR)
(74) Mandataire: Cabinet Chaillot

(56) Documents cités:
- DE-U1- 29 706 946
- FR-A1- 2 659 191
- FR-A1- 2 767 454
- GB-A- 2 558 545

## Description

La présente invention porte sur un réceptacle souple pour la culture des plantes.

Les végétaux sont classiquement cultivés soit en pleine terre soit dans des récipients tels que par exemple des pots ou des bacs.

Les cultures de végétaux nécessitent une irrigation régulière pour pouvoir donner de bons résultats. Cependant, un arrosage quotidien est une tâche fastidieuse qui peut conduire à des pertes importantes de l'eau qui a été utilisée pour arroser les végétaux, et pour lequel le temps consacré est conséquent.

On connaît par le document FR 2 767 454, un dispositif de réserve d'eau pour équiper les récipients destinés à la culture des végétaux. Le dispositif est composé de trois récipients, un premier récipient comprenant le substrat de croissance des végétaux, un deuxième récipient contenant une réserve d'eau, et un troisième récipient qui supporte l'ensemble formé des deux premiers récipients.

Le premier récipient qui contient le substrat de croissance comprend un orifice de drainage pour le trop plein de liquide et un plancher doté d'une pluralité d'ouvertures pour le passages des racines vers la réserve d'eau.

Le deuxième récipient est un récipient souple destiné à recevoir la réserve d'eau. Il est constitué d'une poche souple dont la partie supérieure est rattachée au premier récipient.

Une telle configuration entre les premier et deuxième récipients crée une lame d'air entre le plancher du premier récipient et le niveau d'eau contenue dans le deuxième récipient qui vient affleurer l'extrémité basse de l'orifice de drainage.

Cette lame d'air est préjudiciable pour la santé des végétaux car elle accélère la putréfaction des racines des végétaux et génère un stress hydrique. Ces phénomènes d'oxydation et/ou de dessèchement peuvent provoquer la mort des végétaux.

De plus, l'autonomie du dispositif ne peut pas être suffisante, car une fois que le niveau de l'eau passe au-dessous des racines, l'eau ne peut pas remonter et les racines ne peuvent plus capter l'eau.

On connaît par le document FR 2 659 191, un réceptacle souple comprenant une réserve d'eau et destiné à habiller les parois intérieures d'un conteneur pour plantes.

On connaît par le document FR 1 296 711, un bac pour la culture de plantes qui est irrigué en permanence afin qu'il ne soit pas nécessaire d'arroser les plantes.

La plante est en croissance dans un substrat contenu dans un bac qui communique avec un réservoir par un orifice d'entrée d'eau. Le substrat de croissance est recouvert d'une couche de graviers à grains fins pour réduire l'évaporation à la surface. Le fond du bac contient d'abord une couche de graviers à gros grains puis une couche de graviers à grains fins sur laquelle vient reposer le substrat. Les différentes couches peuvent être séparées par une toile métallique ou une feuille perforée. Le gravier n'a pas de capacité de rétention d'eau, d'où il résulte que la couche de graviers à gros grains ne permet pas à l'eau de remonter dans les couches supérieures par capillarité. En effet, lorsque le niveau de l'eau passe sous le niveau supérieur de la couche de graviers à gros grains, une lame d'air est créée et ceci peut entraîner un dessèchement très rapide des plantes.

Le bac est rempli d'eau jusqu'au niveau de la surface supérieure de la couche de graviers à gros grains. Ce niveau est déterminé par la position de l'orifice d'entrée d'eau du réservoir. Celui-ci est situé au niveau de la couche à gros grains et dans le cas où des feuilles de séparation perforées sont utilisées, un risque d'obturation de l'orifice d'entrée d'eau existe.

Le bac dispose d'un orifice de trop-plein dans une paroi latérale pour permettre l'écoulement de tout excès d'eau. Or cet orifice est situé au niveau de la couche de substrat de croissance des végétaux. Si cet orifice devient bouché par les racines ou si des pluies importantes provoquent la montée du niveau d'eau dans le bac, il existe un risque très important pour les plantes. En effet, un niveau d'eau trop élevé dans le substrat de croissance pourrait entraîner une asphyxie des plantes en raison d'un phénomène d'hydromorphie.

Le bac peut être entièrement ou partiellement fait en un matériau poreux.

Le bac possède un réservoir d'eau accolé ou à distance à la condition que le réservoir soit au même niveau horizontal.

Le bac selon FR 1 296 711 est donc obligatoirement accompagné d'un réservoir d'eau. La présence du réservoir d'eau ne permet pas de déplacer facilement le bac en raison de l'encombrement et du poids du réservoir.

Ce système n'est donc pas adapté à la formation de bacs de grand volume car cela nécessiterait des réservoirs d'eau de grandes dimensions et très encombrants.

Il existe donc un besoin d'un dispositif ne nécessitant pas un arrosage quotidien ou très fréquent des plantes et permettant un apport continuel d'eau sans assèchement racinaire tout en éliminant le risque d'hydromorphie.

Par ailleurs, il serait intéressant de proposer des réceptacles pour la culture des plantes qui puissent également être réalisés sur mesure afin de pouvoir équiper toutes configurations de jardins.

A cet effet, l'invention porte sur un réceptacle souple pour la culture de plantes, comportant:
- une enveloppe souple en matériau imperméable ouverte à sa partie supérieure, laquelle est destinée à recevoir, dans un compartiment inférieur, un matériau poreux, et dans un compartiment supérieur, un substrat de culture des plantes ;
- une nappe de séparation poreuse, venant séparer les deux compartiments ;
- un moyen d'amenée dans le compartiment inférieur, d'une eau de mouillage du substrat, laquelle est destinée à remonter par capillarité le matériau poreux pour venir mouiller le substrat en traversant la nappe de séparation, l'eau de mouillage du substrat étant une eau pouvant contenir au moins un nutriment et/ou au moins un engrais ; et
- un moyen d'évacuation de l'eau de mouillage par au moins un orifice de l'enveloppe dans la région du compartiment inférieur,
une tige (30) étant disposée dans la poche de passage d'eau de mouillage pour éviter que la poche ne reste plaquée contre la paroi du réceptacle (2) en position d'utilisation.

Le substrat de culture de plantes peut par exemple être de la terre, un terreau, du sable, de la tourbe et leurs mélanges.

Le matériau poreux du compartiment inférieur peut être :
- un matériau granulat recyclé de béton cellulaire vendu sous les dénominations « COPOLIGHT® » ou « Granulège » ou « SIPOREX® nature », et ayant une granulométrie 7/15 sous forme de granulats et 5/15 sous forme concassée, une porosité de 500 à 730 mL/L, une capacité de rétention d'eau de 180 à 230 mL/L et une masse volumique de 350 à 370 kg/m³ ;
- de la pouzzolane ayant une granulométrie 2/5 ou 18/25 ou 25/50, une porosité de 480 à 550 mL/L, une capacité de rétention d'eau de 120 à 160 mL/L et une masse volumique de 700 à 850 kg/m³ ;
- de l'argile expansée vendue sous la dénomination « LATERLITE® Agri » ou « LATERLITE® PIU » ayant une granulométrie 2/4 sous forme concassée ou 3/8 sous forme granulaire ;
- un matériau granulat roche volcanique de pierre ponce vendu sous la dénomination « Pomice », et ayant une granulométrie 3/6 ou 3/10, une porosité de780 à 890 mL/L, une capacité de rétention d'eau de 270 à 350 mL/L et une masse volumique de 280 à 350 kg/m³ ;
- des substrats minéraux de grande pureté et issus de transformation géologique de matériaux volcaniques, vendus sous la dénomination « Hortizeo » et ayant une granulométrie 3/6 ou 6/18 ou sous la dénomination « Agrizeo » et ayant une granulométrie 0,7 ou 2 ou sous la dénomination « ZEOGRASS® » et ayant une granulométrie 0,5 ou 1 mm ;
- des éponges synthétiques, naturelles, comme le loofah, en vrac ;
- de la sphaigne en vrac ;
- du chanvre en blocs en vrac.

Tous ces matériaux peuvent être mis en place dans le compartiment inférieur en vrac ou en bloc dans une structure rigide de type structure en nid d'abeille constituée de larges colonnes hexagonales vides. Ceci permet le chargement du substrat de culture dans le compartiment supérieur sans tassement ni affaissement des matériaux poreux dans le compartiment inférieur.

La nappe de séparation peut être solidaire d'au moins une partie de la ou des parois de l'enveloppe du réceptacle. Par exemple, la nappe de séparation peut être cousue à l'une des parois de l'enveloppe du réceptacle.

La nappe de séparation peut être une nappe de type géotextile par un exemple un géotextile de classe 3, d'une masse surfacique de 140 g/m².

Le moyen d'amenée d'eau de mouillage peut être un tube dont la première extrémité est accessible par le dessus du réceptacle et dont la seconde extrémité présente un coude qui vient reposer contre le fond du réceptacle, le tube étant maintenu par des attaches sur l'enveloppe et/ou par la présence du substrat de culture et du matériau poreux, la diffusion de l'eau en fond du réceptacle pouvant être réalisée à l'aide d'une gaine perforée souple ou d'un répartiteur à plusieurs sorties perforées fixés sur le coude pour maximiser le mouillage des matériaux poreux.

On peut disposer, au niveau de l'orifice d'évacuation d'eau de mouillage, sur la partie extérieure du réceptacle, une poche de passage d'eau de mouillage, ouverte à son extrémité inférieure, en position d'utilisation, afin de permettre l'évacuation de l'eau de mouillage sortant de l'orifice d'évacuation d'eau de mouillage.

Une tige est disposée, généralement verticalement en position d'utilisation, dans la poche de passage d'eau de mouillage pour éviter que la poche ne reste plaquée contre la paroi du réceptacle en position d'utilisation, ladite tige, dite ainsi tige anti-écrasement, pouvant être creuse et laisser passer au moins une partie de l'eau de mouillage sortant de l'orifice d'évacuation d'eau de mouillage.

On peut disposer, au niveau de l'orifice d'évacuation d'eau de mouillage, sur la partie intérieure du réceptacle, un dispositif pare-racine et anti-bouchage, empêchant les racines des plantes d'obstruer l'orifice d'évacuation d'eau de mouillage.

Le compartiment inférieur peut comprendre deux sous-compartiments séparés par une nappe de séparation poreuse, le premier sous-compartiment étant situé au-dessous du compartiment supérieur, le second sous-compartiment étant placé entre le premier sous-compartiment et le fond du réceptacle, le matériau poreux présent dans le premier sous-compartiment, ayant une porosité plus faible que le matériau poreux présent dans le second sous-compartiment.

Le réceptacle peut être de forme parallélépipédique, comprenant une face de fond rectangulaire se prolongeant sur chacun de ces côtés par quatre faces rectangulaires que l'on peut joindre de manière étanche deux à deux afin de former le réceptacle.

Le matériau imperméable peut être choisi parmi le poly(chlorure de vinyle), un polyester, un caoutchouc EPDM, un polycarbonate, le polypropylène, le polyéthylène haute densité, le polyéthylène basse densité, le poly(téréphtalate d'éthylène), l'Acrylonitrile-Butadiène-Styrène et un polyamide 6 chargé à 30 % de fibres de verre, un polymère biosourcé, du poly(chlorure de vinyle) de qualité alimentaire, l'enveloppe devant être souple.

Le matériau de l'enveloppe souple peut être constitué d'un tissu de textile technique d'origine naturelle, chimique ou minérale, enduite d'une résine d'enduction telle que le polyuréthane, polyacrylate, poly(chlorure de vinyle), latex, élastomères de silicone ou mélanges polymères.

Le matériau imperméable peut être une matière plastique biosourcée ou un polymère biosourcé.

Avantageusement, le poly(chlorure de vinyle) peut être un poly(chlorure de vinyle) à traitement anti-UV, anti-bactérien et de qualité alimentaire.

Conformément à un mode de réalisation particulier du réceptacle selon la présente invention, l'enveloppe peut être équipée de moyens permettant de la soulever en vue de sa manutention lorsqu'elle est remplie, lesdits moyens consistant en au moins une anse, laquelle peut constituer un point de levage pour le passage de la fourche d'un chariot élévateur, lesdits moyens pouvant consister en des sangles fixées le long de la bordure périphérique supérieure de l'enveloppe et formant chacune au-dessus de celle-ci une boucle formant anse.

On peut par exemple utiliser des sangles formant des boucles à chaque angle d'une enveloppe parallélépipédique, les deux régions d'extrémité de chacune de ces sangles étant fixées à plat verticalement dans la région supérieure de l'enveloppe de part et d'autre d'un bord vertical de l'enveloppe. Il peut donc être formée une anse par exemple sur 40 à 60 cm de hauteur au-dessus de l'enveloppe. On peut ainsi assurer un levage sans frottement. On peut citer l'emploi de quatre telles sangles pour une enveloppe à base carrée.

On peut également disposer des sangles de façon régulière autour de la bordure périphérique supérieure d'une enveloppe, les régions d'extrémité de chacune de ces sangles étant fixées à plat verticalement dans la région supérieure de l'enveloppe de part et d'autre de celle-ci, à distance des angles dans le cas des enveloppes parallélépipédiques, la sangle ayant par exemple une partie se situant au-dessus de l'enveloppe de 60 à 80 cm où les deux parties de sangle voisines du bord supérieur de l'enveloppe peuvent être accolées pour ne former la boucle qu'en partie haute. On peut citer l'emploi de huit telles sangles pour une enveloppe à base rectangulaire.

D'autres modes de fixation des sangles sont également envisageables, du type de ceux utilisés sur les chantiers pour le transport de matériaux ou de gravats.

Les fixations des sangles s'effectuent par tous moyens : couture, par exemple en points zig-zag pour permettre une parfaite tenue à l'effort au levage, adhésif ou les deux. Les sangles sont fixées sur des hauteurs pouvant varier, étant par exemple fixées sur 1/3 de la hauteur de l'enveloppe à partir de sa bordure périphérique supérieure. Elles peuvent ne pas être cousues sur quelques centimètres de cette bordure périphérique. Elles peuvent avoir une largeur de 50 mm, être résistantes aux intempéries et aux UV, être tissées à 100% polyester. Leur capacité de levage peut être de 5 tonnes.

Conformément à un mode de réalisation particulier du réceptacle selon l'invention, l'enveloppe peut être souple et comporter des moyens pour en maintenir le galbe ou pour la rendre autoportante lorsqu'elle est en position de remplissage, lesdits moyens consistant en des parties renforcées de la paroi périphérique de l'enveloppe, par exemple des parties renforcées sous forme d'au moins une bande périphérique horizontale de type ceinture, et/ou en éléments écarteurs, par exemple sous forme de bandes de matière réunissant deux parois opposées de l'enveloppe, en particulier se situant au-dessus de la nappe de séparation des deux compartiments de l'enveloppe.

Pour constituer les parties renforcées, on peut coudre des pièces de type sangles formant des ceintures faisant le tour de l'enveloppe, par exemple tous les 20 à 30 cm en hauteur, la ceinture supérieure se trouvant par exemple à 5 cm de la bordure périphérique supérieure de l'enveloppe. Ces sangles peuvent être du même type que celles décrites ci-dessus.

Pour maintenir le galbe de l'enveloppe et en conséquence éviter un « effet de ventre » et un risque de basculement de l'enveloppe, on peut prévoir au moins un écarteur constitué par une bande de matériau rigide ou semi-rigide, qui peut être aussi une sangle, par exemple telle que définie ci-dessus, et qui peut présenter la forme d'un U à fond allongé, fixé par ses ailes, par couture et/ou collage, contre deux parois internes en regard de l'enveloppe, le fond du U constituant une traverse. On pourra par exemple prévoir deux telles traverses disposées en croix.

L'invention porte également sur un ensemble pour la culture de plantes comprenant un réceptacle tel que défini ci-dessus, et un environnement de réception apte à recevoir le réceptacle en position d'utilisation, le réceptacle possédant sur sa partie extérieure au voisinage de ses bordures supérieures en position d'utilisation, des moyens de fixation du réceptacle à l'environnement de réception.

Dans un premier mode de réalisation, l'environnement de réception peut être un bac à plantes comprenant au moins une ouverture dans sa paroi de fond en position d'utilisation pour évacuer l'eau de mouillage sortant de l'orifice d'évacuation d'eau de mouillage.

Les bacs peuvent être des bacs d'une surface d'au moins 0,1 m² et d'une hauteur d'au moins 0,3 m et d'au plus 0,8 à 1,2 m. Les longueurs et largeurs des bacs ne peuvent être limitées que par la limite technique acceptable de réalisation dans les règles de l'art de soudage de lès entre eux sur place et l'apport de matériaux sans risque de détérioration des parois du réceptacle.

Dans un second mode de réalisation, l'environnement de réception peut être une jardinière sans fond, un carré potager sans fond, une toiture-terrasse, un espace sans fond entre bordures en accompagnement de voirie, des massifs en pleine terre, des massifs urbains hors sols, des cultures agricoles ou maraîchères en pleine terre.

Avantageusement, Les moyens de fixation peuvent être des bandes adhésives, des agrafes ou des pointes.

Pour mieux illustrer l'objet de la présente invention, on va en décrire ci-après, à titre indicatif et non limitatif, plusieurs modes de réalisation avec référence au dessin annexé.

Sur ce dessin
- la Figure 1 est une vue en perspective d'un réceptacle de culture de plantes selon l'invention en place dans un bac à plantes, constituant un ensemble conforme à un premier mode de réalisation de l'invention, un arrachement ayant été pratiqué pour montrer une partie de l'intérieur de cet ensemble ;
- la Figure 2 est une vue en coupe verticale d'un ensemble conformément à un autre mode de réalisation dans lequel des plantes ont été mises en place, cette vue montrant la zone d'évacuation d'eau de mouillage de l'ensemble ;
- la Figure 3 montre, à plus grande échelle, la partie de droite de la Figure 2, permettant de mieux voir la zone d'évacuation de l'eau de mouillage ;
- la Figure 4 est une vue analogue à la Figure 2 montrant un ensemble conforme à un troisième mode de réalisation de l'invention ;
- la Figure 5 est, à plus grande échelle, une vue de la partie gauche de la Figure 4 ;
- la Figure 6 est une vue analogue à la Figure 4 montrant un ensemble conforme à un quatrième mode de réalisation de l'invention ;
- la Figure 7 montre, à plus petite échelle, une vue de face de la partie extérieure du bac à plantes des Figures 1 à 3, avec un arrachement de la paroi pour laisser voir le dispositif d'évacuation de l'eau de mouillage, lui-même représenté avec un arrachement ;
- la Figure 8 montre, également à plus petite échelle, la feuille découpée avant sa mise en volume pour constituer le réceptacle de culture de plantes, selon l'invention ;
- la Figure 9 est, à plus grande échelle, une vue partielle de la paroi interne du réceptacle dans sa région d'évacuation de l'eau de mouillage ;
- la Figure 10 est une vue en coupe verticale d'un ensemble conformément à un autre mode de réalisation, dans lequel le compartiment inférieur est composé de deux sous-compartiments ;

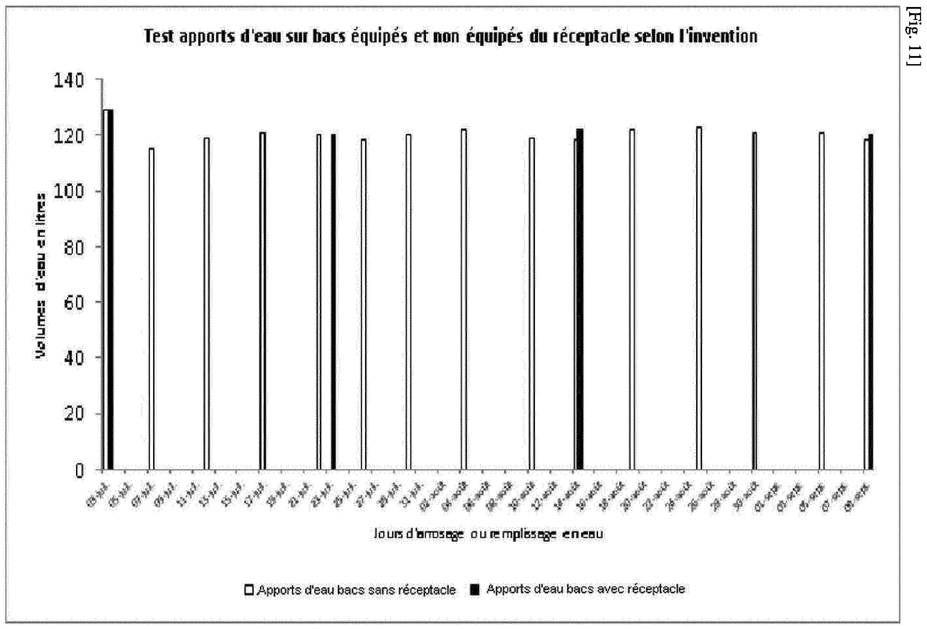

- la Figure 11 est un graphique représentant la fréquence et le volume d'apport d'eau pour des bacs équipés ou non du réceptacle selon l'invention ; et

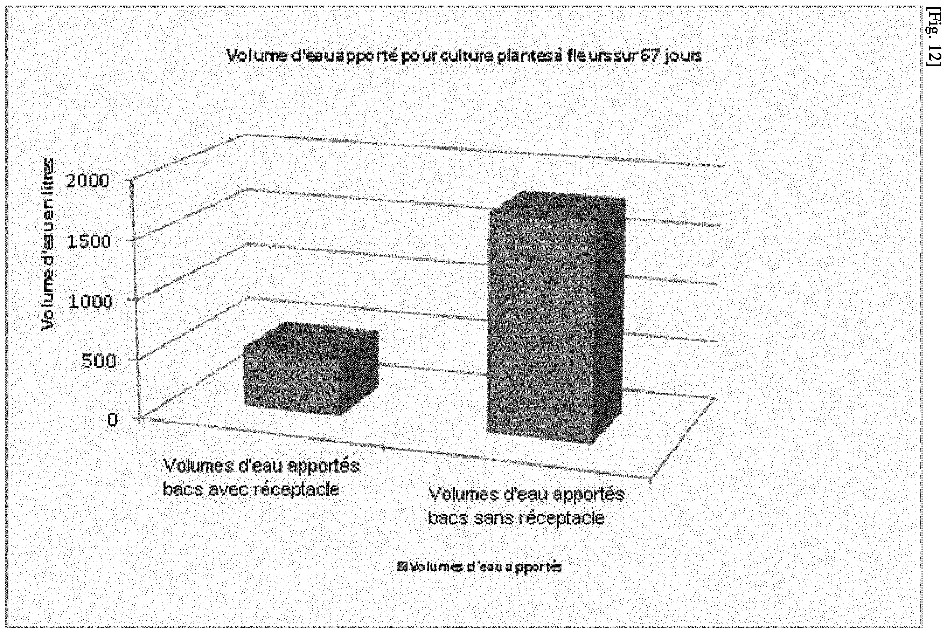

- la Figure 12 est un graphique représentant le volume total d'eau apporté dans des bacs équipés ou non du réceptacle selon l'invention pour la culture de plantes à fleurs sur une période de 67 jours.

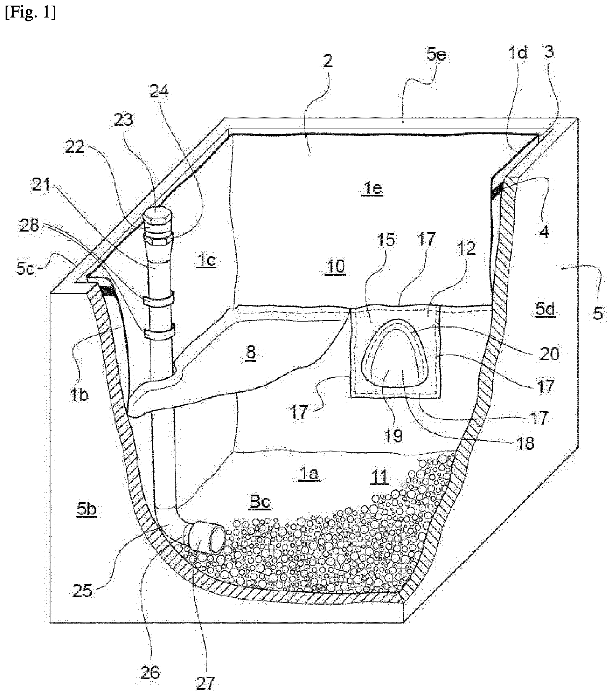

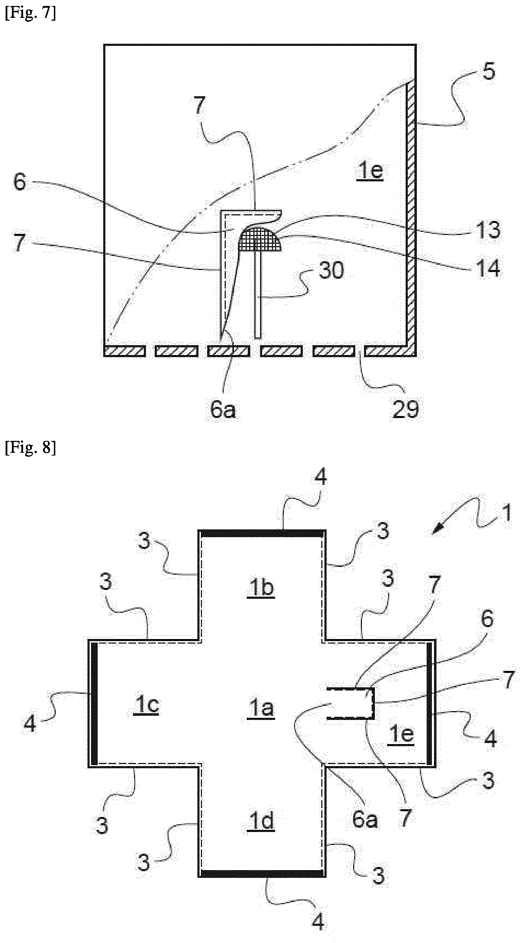

Si l'on se réfère à la Figure 8, on peut voir que l'on a représenté une feuille souple découpée 1 qui est destinée à être mise en volume pour former le réceptacle souple 2 des Figures 1, à 3.

Cette feuille 1 présente la forme d'un carré de base la prolongé sur chacun de ses côtés par un carré 1b, 1c, 1d, le. Le carré de base la constituera le fond du réceptacle 2 et les quatre carrés latéraux la à le, les quatre parois latérales du réceptacle 2.

Sur la Figure 8, on a également représenté par des pointillés des zones de soudure 3 à haute densité, le long des deux bords opposés de chacun des carrés 1b à le.

Lors de la mise en volume du réceptacle 2, deux zones de soudure voisines situées à angle droit sur la Figure 8 sont soudées ensemble pour constituer les parois verticales 1b à le dressées sur le fond la comme on peut le voir sur la Figure 1.

La feuille 1 est par exemple une feuille formée d'une trame de fils enduite d'une résine d'enduction pour la rendre imperméable.

L'enduction de la feuille 1 permet d'obtenir une couche de matière plastique sur chaque face de la feuille permettant d'obtenir une parfaite étanchéité.

Au voisinage de chacun des bords libres des carrés 1b à le, sont fixées des bandes adhésives 4 protégées par une bande protectrice. Ces bandes adhésives 4 servent à fixer le réceptacle 2 dans le bac à plantes 5 qui sera décrit ci-après ou dans l'environnement de réception.

Sur le côté externe de la feuille 1, est également fixée une bande 6 comme on peut le voir sur la Figure 8.

La bande 6 est de forme rectangulaire. Elle est appliquée sur le carré le, de façon centrale, l'un de ses bords transversaux (bord 6a) venant se placer selon la ligne réunissant le carré la et le carré le, le bord transversal opposé de la bande 6 se situant à mi-distance entre cette ligne et le bord libre du carré le. Les bords transversaux de la bande 6 ont une longueur environ du quart du côté de la bande le dans l'exemple représenté.

La bande 6 est soudée à la feuille 1 par ses trois côtés 7, seul le bord transversal 6a restant libre. L'espace formé entre la bande 6 et la face le sur laquelle elle est disposée forme une poche de passage d'eau de mouillage.

Par ailleurs, comme on peut le voir sur la Figure 1, contre la paroi interne 1b du réceptacle 2, est cousue, par l'une de ses bordures, une nappe 8 géotextile anticontaminante. La nappe 8 permet de former une séparation physique entre un compartiment supérieur 10 et un compartiment inférieur 11.

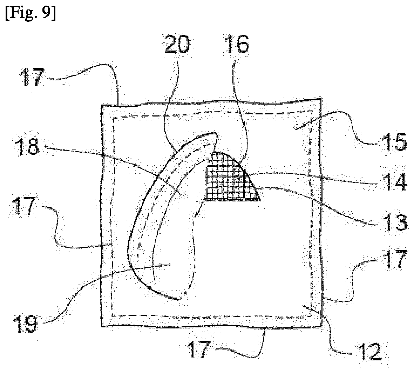

Sur la paroi interne 1b du réceptacle 2, est également cousu un dispositif 12 d'évacuation d'eau de mouillage. On va maintenant décrire le dispositif 12 d'évacuation d'eau de mouillage en rapport avec les figures 7 et 9.

Comme on peut le voir sur la Figure 7, une ouverture 13 de trop-plein d'eau de mouillage est ménagée dans la face le du réceptacle 2. L'ouverture 13 est placée de telle sorte qu'elle est située au voisinage du côté supérieur 7 de la bande 6 à l'opposé de son bord libre 6a et à distance égale de ses deux côtés latéraux 7.

Une grille 14 est placée devant l'ouverture 13 sur le côté intérieur de la paroi le afin d'empêcher que l'ouverture 13 ne soit bouchée par des débris qui passeraient à travers elle. Les dimensions de la grille 14 sont supérieures à celles de l'ouverture 13 de telle sorte que la grille 14 couvre toute l'ouverture 13. Afin de maintenir la grille 14 en position devant l'ouverture 13, la grille 14 est soudée sur une bande 15 dans laquelle on a ménagé une ouverture 16 en demi-cercle correspondante à l'ouverture 13, de telle sorte que la grille 14 couvre l'ouverture 16. La bande 15 est placée devant l'ouverture 13 dans une position telle que les ouvertures 13 et 16 correspondent l'une avec l'autre. La bande 15 est ensuite soudée sur chacun de ses côtés 17 à la face le du réceptacle 2. En procédant ainsi, la grille 14 est maintenue en place devant l'ouverture 13.

Sur le mode de réalisation représenté sur la Figure 1, la nappe 8 est cousue au niveau du côté supérieur 16 de la bande 15. Dans d'autres modes de réalisation non représentés, la nappe 8 peut être cousue au-dessus de la bande 15 à une distance d'environ 20 mm.

Afin que les racines des plantes ne puissent pas boucher l'ouverture 13, on vient placer devant celle-ci un dispositif pare-racine et anti-bouchage 18.

Le dispositif pare-racine et anti-bouchage 18 possède une coque 19 en forme de demi-cloche qui se prolonge le long de ses bordures longitudinales par une partie 20 en retour vers l'extérieur plane.

Le dispositif pare-racine et anti-bouchage 18 est fixé sur la bande 15 le long de sa partie 20 au-dessus de l'ouverture 16 de la bande 15 de telle sorte que le sommet de la coque 19 corresponde à l'ouverture 16 de la bande 15.

Le dispositif pare-racine et anti-bouchage 18 empêche que les racines ne s'accumulent devant l'ouverture 13, la coque empêchant que les racines ne remontent dans l'espace formé entre la partie interne de la coque 19 et la bande 15 de la face le du réceptacle 2. Cela permet de créer un espace vide permettant un écoulement libre d'eau de mouillage en trop plein.

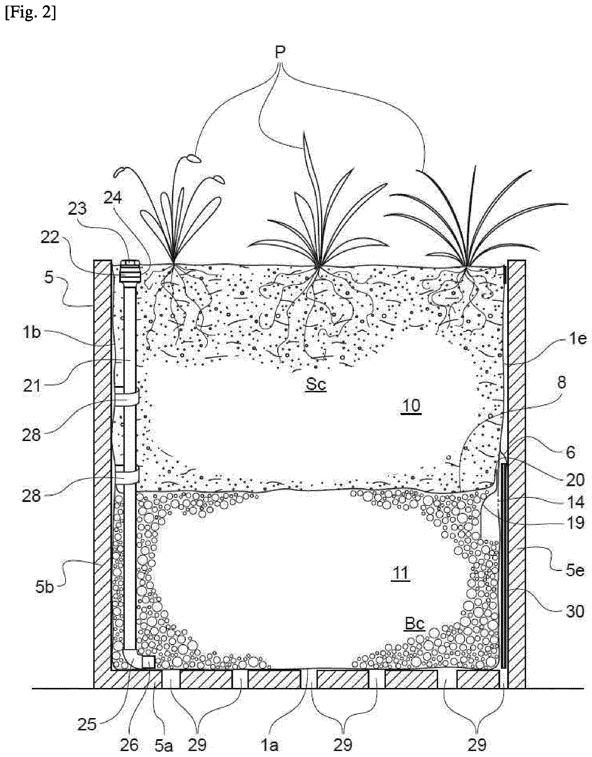

Afin d'alimenter le réceptacle en eau de mouillage, on vient placer contre l'une des faces du réceptacle un tube 21. Sur la figure 1, le tube 21 est placé contre la face 1b du réceptacle alors que sur les Figures 2, 4, 5 et 6, le tube 21 est placé contre la face 1c, opposée à celle qui porte la zone d'évacuation d'eau de mouillage.

Si l'on se réfère à la Figure 1, le tube 21 possède une première extrémité 22 par laquelle on pourra venir remplir le réceptacle 2 par le dessus de celui-ci. Sur la Figure 1, le tube 21 est bouché par le bouchon 23, par exemple en laiton. Dans le cas on souhaite venir fixer un tube de plus gros diamètre sur le tube 21, celui-ci est doté d'une collerette 24 afin de pouvoir adapter sur cette dernière un tube de plus grand diamètre.

Le tube 21 est coudé dans sa partie inférieure par un coude 25 qui vient au fond la du réceptacle 2. Comme on peut le voir sur le mode de réalisation représenté à la Figure 1, le tube 21 a à son extrémité inférieure 26, un dispositif 27 de plus grand diamètre qui peut recevoir une grille anti-bouchage (non représentée).

Le tube 21 est maintenu solidaire avec le réceptacle 2 à l'aide de deux anses 28 dont les deux extrémités sont fixées sur une paroi du réceptacle et à travers lesquelles le tube 21 passe.

Dans l'exemple représenté, le tube 21 et les anses 28 sont placés sensiblement au milieu de l'une des faces du réceptacle 2. Il est également possible de placer le tube 21 et les anses 28 au voisinage d'un coin du réceptacle 2 mis en volume.

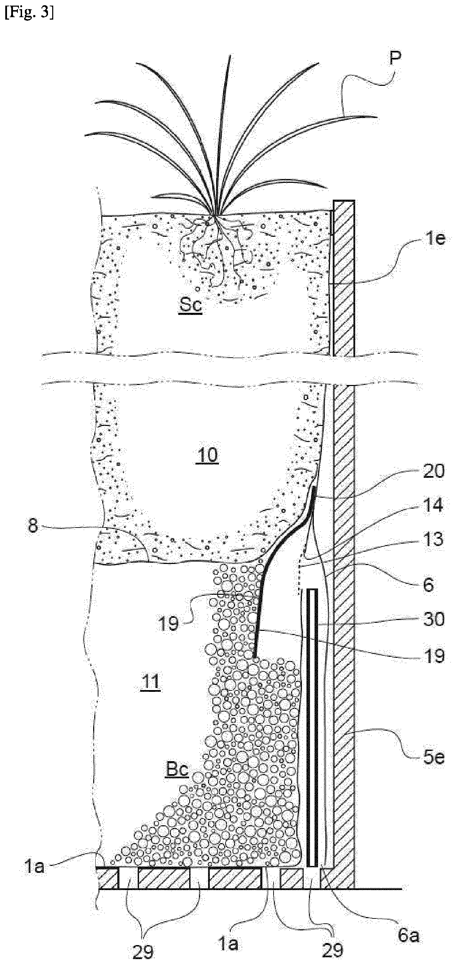

Le réceptacle 2 selon la présente invention peut être placé dans un bac à plantes 5, comme cela est représenté sur les Figures 1, 2, 3 et 7.

Le bac à plantes 5 est un récipient parallélépipédique comportant un fond 5a et quatre parois latérales 5b, 5c, 5d et 5e. Le fond 5a du bac 5 possède une pluralité d'ouvertures 29. Ces ouvertures 29 permettent que l'eau de mouillage qui sort de l'ouverture 13 de trop-plein d'eau de mouillage du réceptacle 2 puisse quitter le bac à plantes 5 par celles-ci.

Sur les Figures, les parois latérales 5b, 5c, 5d et 5e sont pleines, mais celles-ci pourraient également être ajourées.

On va maintenant décrire l'installation et l'utilisation du réceptacle 2 dans le bac à plantes 5, ce dernier ayant été au préalable nettoyé.

Tout d'abord, on vient placer le réceptacle 2, préalablement mis en volume, dans le bac à plantes 5 de telle sorte que la face la du réceptacle vienne reposer sur la surface du fond 5a du bac à plantes 5.

On retire les bandes protectrices qui protègent les bandes adhésives 4 et on vient appliquer chaque bande adhésive 4 sur la face interne de la paroi latérale correspondante du bac à plantes 5. De cette manière les faces latérales 1b, 1c, 1d et 1e adhèrent, par leur côté extérieur, au côté intérieur des faces latérales, respectivement 5b, 5c, 5d et 5e du bac à plantes 5.

On vient ensuite placer le tube 21 contre l'une des faces internes du réceptacle 2, en le faisant passer à travers les anses 28.

Le tube 21 peut également avoir été placé lors de la fabrication de la feuille 8 et est alors déjà en place au moment de la pose du réceptacle 2 dans le bac 5.

Ensuite on procède au remplissage du compartiment inférieur 11 et du compartiment supérieur 10. Pour remplir le compartiment inférieur 11, on soulève la nappe 8 et on remplit le réceptacle 2 dans sa partie inférieure par un matériau de type béton cellulaire Bc de granulométrie 7/15 sensiblement jusqu'au niveau de la nappe 8.

Puis on replie la nappe 8 sur le matériau que l'on vient de placer dans le fond du réceptacle 2, de telle sorte que la nappe 8 soit sensiblement horizontale. Dans les exemples représentés, les dimensions de la nappe 8 sont supérieures aux dimensions de la face la du réceptacle 2. Avec de telles dimensions de la nappe 8, les bordures libres de la nappe 8 peuvent remonter le long des faces latérales du réceptacle 2. Ceci permet d'assurer une meilleure séparation entre le compartiment inférieur 11 et le compartiment supérieur 10.

Une fois la nappe 8 repliée, on remplit le compartiment supérieur 10 du réceptacle 2 avec le substrat Sc de culture des plantes. Sur les exemples représentés, le niveau du substrat Sc vient affleurer avec les bords supérieurs du réceptacle 2 et du bac à plantes 5, mais il serait également possible de ne pas remplir complètement le compartiment supérieur 10 avec le substrat Sc.

Ensuite on peut venir remplir en eau de mouillage le compartiment inférieur à l'aide du tube 21 et d'un dispositif d'arrivée d'eau de mouillage approprié. L'eau de mouillage est introduite dans le tube 21 par l'ouverture 22 et remplit progressivement le compartiment inférieur 11.

Une fois que le niveau de l'eau de mouillage atteint l'ouverture 13, de l'eau de mouillage peut s'échapper par cette dernière. Au préalable de l'installation du réceptacle 2 dans le bac à plantes 5, on a introduit dans l'espace formé entre la bande 6 et la face le sur laquelle elle est disposée, une tige 30. Cette tige 30 permet à l'eau de mouillage quittant le réceptacle 2 par l'ouverture 13 de s'écouler facilement au droit de la tige 30 entre la bande 6 et son bord libre 6a.

La tige 30 est une tige résistante à l'écrasement, flexible ou non, et d'un diamètre extérieur par exemple de 16 mm.

En effet, en raison de la pression que les matériaux introduits dans le réceptacle exercent sur les parois du bac à plantes 5, il est possible qu'en l'absence de la tige 30, l'eau de mouillage ne puisse pas quitter facilement le réceptacle 2. Avec la tige 30, on crée un espace libre par lequel l'eau de mouillage peut s'écouler facilement.

Une fois que l'on a rempli le compartiment inférieur approximativement jusqu'à la nappe 8, on peut couper l'arrivée d'eau de mouillage.

Le niveau de l'eau de mouillage peut être mesuré à l'aide d'une jauge que l'on vient placer à l'intérieur du tube 21. Cette jauge peut être connectée pour permettre de collecter des données et avoir ainsi une gestion raisonnée et centralisée des apports d'eau à l'échelle d'une ville ou d'un quartier.

Une fois le réservoir rempli, les plantes P qui sont en croissance dans le substrat Sc peuvent « appeler » l'eau de mouillage qui est contenue dans le compartiment inférieur 11. L'eau de mouillage va remonter par capillarité, depuis le compartiment inférieur 11, vers le substrat Sc dans le compartiment supérieur 10 en traversant la nappe de séparation 8.

Il est également possible de mettre en place des semis dans le substrat Sc.

Ceci permet au substrat Sc d'avoir une teneur en eau de mouillage appropriée pendant une longue période de temps sans avoir à remplir le réceptacle 2 trop fréquemment.

Le réceptacle 2 peut être facilement déplacé dans un autre bac à plantes 5 ou dans un autre environnement de réception du réceptacle 2.

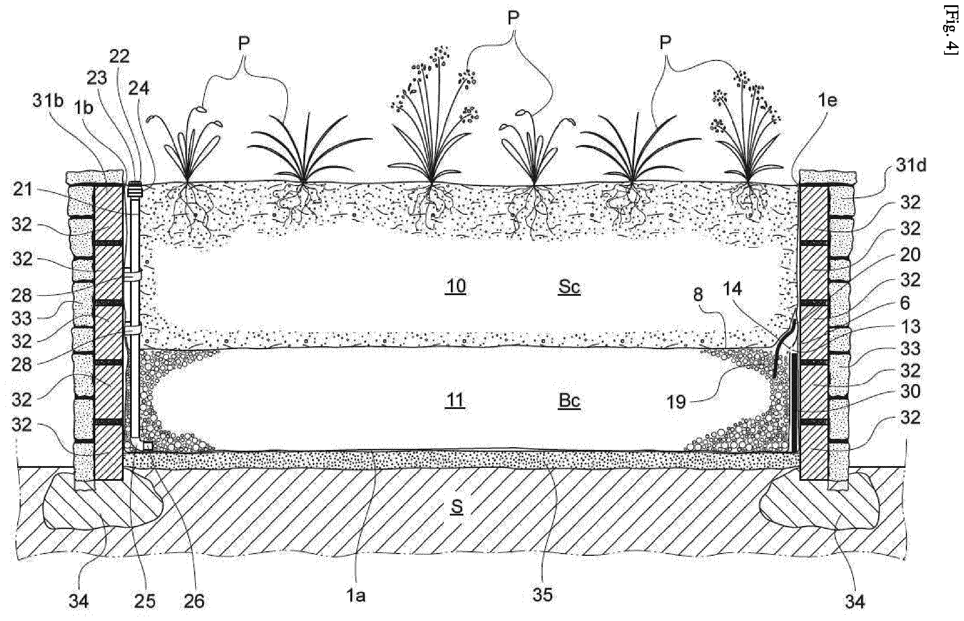

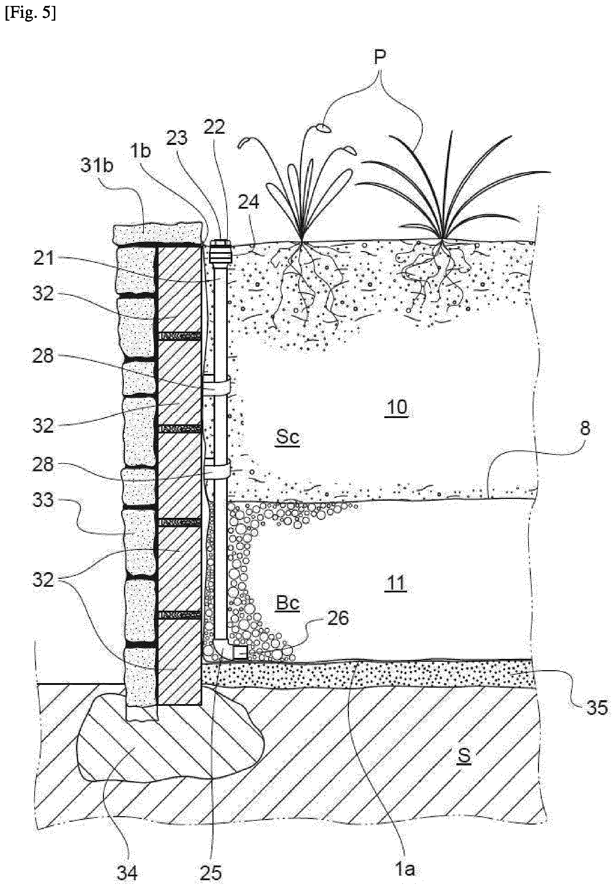

On peut par exemple placer le réceptacle 2 selon la présente invention dans une jardinière sans fond tel que cela est représenté sur les Figures 4 et 5.

La jardinière sans fond comprend quatre parois latérales qui forment un enclos fermé et dont seules les parois 31b et 31e sont représentées sur la Figure 4. Chacune des parois latérales est composée par une pluralité de blocs 32 en matériau aggloméré positionnés les uns sur les autres. Les blocs 32 peuvent être coiffés sur leur partie supérieure et revêtus sur leur côté extérieur par un revêtement 33. Ce revêtement 33 peut par exemple être un revêtement en pierres.

Chaque paroi latérale de la jardinière sans fond repose sur une base 34 en béton.

Avant de placer le réceptacle 2 dans la jardinière sans fond, on place une couche de sable 35 sur le sol S au fond de la jardinière. On place ensuite un géotextile de classe 3 (non représenté) sur le sable 35 et sur les côtés intérieurs des blocs 32, afin d'éviter tout poinçonnement du réceptacle 2. Puis on place le réceptacle 2 dans la jardinière de la même façon que dans le bac à plantes 5, la face la du réceptacle 2 venant reposer contre la couche de sable 35 et les faces latérales 1b, 1c, 1d et 1e étant collées sur les parois latérales respectivement 31b, 31c, 31d et 31e (parois 31c et 31d non représentées) à l'aide des bandes adhésives 4.

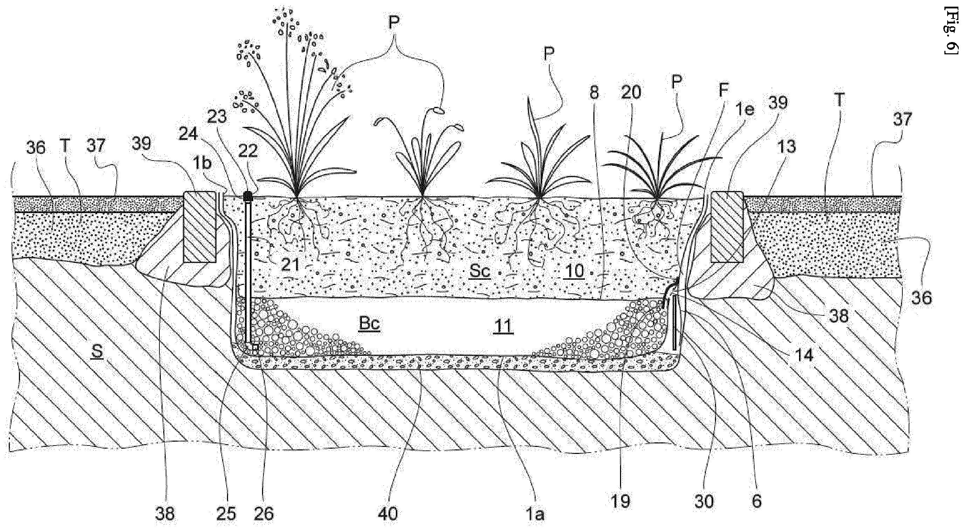

On peut également venir placer le réceptacle 2 selon l'invention en pleine terre comme cela est représenté sur la Figure 6.

Dans un environnement urbain, un trottoir T composé d'une empierrement 36 et d'un enrobé 37 est formé sur le sol S. On peut former une fosse F dans le sol afin d'accueillir le réceptacle 2 selon l'invention.

Des bases 38 en béton dans lesquelles des bordures 39 sont prises permettent de délimiter les contours de la fosse F.

Avant de placer le réceptacle 2 dans la fosse F, on place une couche de sable 40 dans le fond de la fosse F. On place ensuite un géotextile de classe 4 (non représenté) sur le sable 40 et sur les côtés intérieurs de la fosse F et bases 38 et bordures 39, afin d'éviter tout poinçonnement du réceptacle 2. Puis on peut venir placer le réceptacle 2 selon l'invention dans la fosse F, la face la du réceptacle 2 venant contre la couche de sable 40.

Le réceptacle 2 peut être fixé sur les bordures 39 de la fosse F à l'aide des bandes adhésives et le réceptacle 2 pourra venir suivre sensiblement la forme de la fosse F.

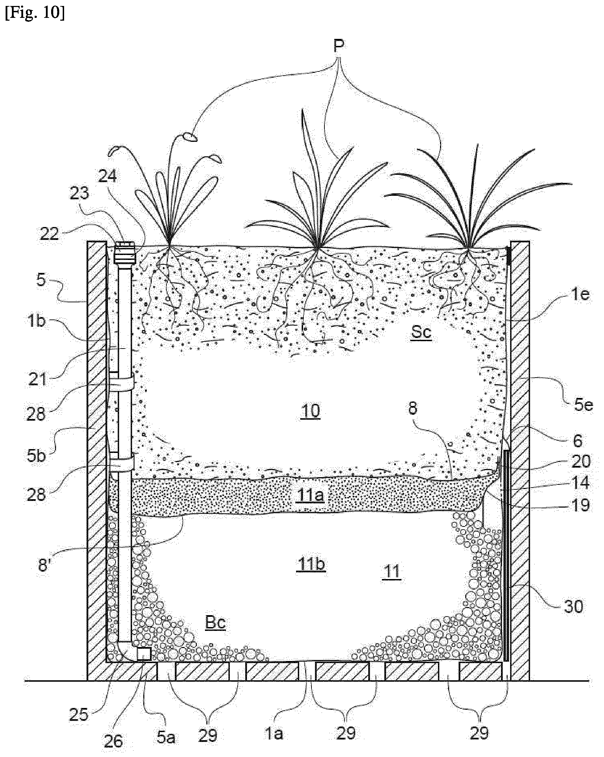

Dans un autre mode de réalisation, représenté en Figure 10, le compartiment inférieur 11 peut comprendre deux sous-compartiments 11a et 11b séparés par une nappe 8' géotextile anticontaminante.

Le premier sous-compartiment 11a, qui est disposé directement au-dessous du compartiment supérieur (10) est rempli à l'aide d'un matériau d'une porosité plus faible que le matériau présent dans le second sous-compartiment 11b, situé entre le premier sous-compartiment 11a et fond le du réceptacle 2. Le premier sous-compartiment 11a sert de « chambre d'appel », c'est-à-dire que la plus faible porosité des matériaux qui y sont contenus va favoriser la montée de l'eau par capillarité vers le substrat de culture Sc présent dans le compartiment supérieur 10.

Par exemple, après avoir rempli le fond du réceptacle 2 avec un béton cellulaire Bc dans le second sous-compartiment 11b, on vient placer la nappe 8' géotextile anti-contaminante. La nappe 8' peut être libre ou peut être fixée à l'une des parois du réceptacle 2.

Une fois la nappe 8' placée sur le béton cellulaire Bc, on vient disposer le matériau de plus faible porosité, comme du sable, dans le premier sous-compartiment. Ensuite on vient rabattre la nappe 8 sur le matériau du premier sous-compartiment 11a afin de former le compartiment inférieur 11.

### Exemple 1 : bacs sous abris

On a placé un réceptacle selon la présente invention dans des bacs de type palox de pommes en bois de dimensions 1,10x1,10x0,70 de hauteur. Une couche de granulat de béton cellulaire est placée dans le compartiment inférieur jusqu'à la nappe de séparation. La nappe est rabattue sur le béton cellulaire et un substrat de croissance est mis en place tassé dans le compartiment supérieur jusqu'au bord supérieur du bac.

Deux bacs ont été testés avec des plantes potagères : salades, fraisiers et betteraves.

Deux bacs ont été testés avec des plantes à fleurs : Pétunias, Cosmos, Laiche de Buchanan, Euryops.

L'eau de mouillage utilisée est une eau de forage.

Au jour 0, les bacs ont été placés sous serre et les bacs ont été remplis d'eau de mouillage jusqu'à évacuation de l'eau de mouillage par l'orifice de trop-plein, ce qui représente un volume d'eau de 184 litres. L'état hydrique du substrat et la durée de bon état de la végétation ont été suivis au cours du temps.

L'eau de mouillage est absente dans le compartiment inférieur et seulement présente dans le substrat de croissance à partir du jour 26 pour les plantes potagères et à partir du jour 29 pour les plantes à fleurs.

Au jour 35 pour les plantes potagères et au jour 37 pour les plantes à fleur, une humidité était présente dans le substrat de croissance dès les trois centimètres superficiels retirés.

Les plantes étaient bien développées sans carence, flétrissement ou stress hydrique observé.

Le réceptacle selon l'invention permet donc un développement satisfaisant des plantes sans apport d'eau de mouillage supplémentaire 35 jours ou 37 jours après le remplissage du réceptacle.

### Exemple 2 : bacs en extérieur

On a placé un réceptacle selon la présente invention dans des bacs de type palox de pommes en bois de dimensions 1,10x1,00x0,54 de hauteur. Une couche de béton cellulaire est placée dans le compartiment inférieur jusqu'à la nappe de séparation. La nappe est rabattue sur le béton cellulaire et un substrat de croissance est mis en place tassé dans le compartiment supérieur jusqu'au bord supérieur du bac.

Trois bacs ont été préparés avec le réceptacle selon la présente invention et trois bacs témoins ont été préparés sans le réceptacle selon la présente invention, ces bacs étant totalement garnis de substrat de croissance. Le substrat de croissance est le même pour chacun des bacs.

Les six bacs ont été testés avec des plantes à fleurs : Gaillarde, Cosmos, Sauge, Bidens et Œillet d'Inde.

L'eau de mouillage utilisée est une eau de forage.

Au jour 0, les trois bacs équipés du réceptacle selon l'invention ont été remplis d'eau de mouillage jusqu'à évacuation de l'eau de mouillage par l'orifice de trop-plein et les trois bacs témoins ont été arrosés jusqu'au refus du sol et écoulement sous les bacs. L'apport en eau est de 129 litres pour chaque bac. L'état hydrique du substrat et la durée de bon état de la végétation ont été suivis au cours du temps.

Pour les bacs témoins, les premiers flétrissements ont été observés le jour 4, ce qui a conduit à effectuer un premier arrosage.

Au jour 16, il n'y avait plus d'eau de mouillage dans le fond des bacs équipés du réceptacle selon l'invention.

Au jour 20, les plantes étaient bien développées, sans aucun problème de flétrissement, ni de carence pour l'ensemble des bacs.

Le substrat montre encore après test en surface de l'humidité dès les trois centimètres superficiels enlevés pour les bacs équipés du réceptacle selon l'invention.

Pour les bacs témoins, l'humidité est peu présente en surface et on observe un assèchement significatif en surface. La fraîcheur se trouve entre 10 et 14 cm de profondeur.

Au jour 20, le premier remplissage des bacs équipés du réceptacle selon l'invention a été effectué alors que les bacs témoins avaient déjà été arrosés quatre fois. Cela correspond à une autonomie en eau de mouillage de 4 à 5 jours pour les bacs témoins et de 20 jours pour les bacs équipés des réceptacles selon l'invention.

L'essai a été poursuivi jusqu'au jour 67. Sur l'ensemble de cette période les bacs témoins ont été arrosés 14 fois et les bacs équipés du réceptacle selon l'invention ont été remplis 3 fois.

Au jour 67, le substrat montre encore, après test en surface, de l'humidité dès les trois centimètres superficiels enlevés pour les bacs équipés du réceptacle selon l'invention.

L'humidité est peu présente en surface pour les bacs témoins. Avant l'arrosage, il y a toujours un assèchement de surface rapide et profond, observé sur 7 à 9 cm en moyenne.

Dans le cas des bacs équipés du réceptacle selon l'invention, les plantes sont bien développées, sans problème de flétrissement, ni carence avec une bonne turgescence. Le fleurissement a été important et de bonne qualité.

Dans le cas des bacs témoins, on observe un développement végétatif un peu moins important en volume de feuillage de l'ordre de 5 à 10 %. Les plantes à fleurs ont été plus souvent défleuries et le feuillage est un peu moins développé. Le fleurissement a été important et de bonne qualité.

Le réceptacle selon la présente invention permet donc de réduire la fréquence de l'arrosage des plantes tout en maintenant une excellente santé de ces dernières.

## Revendications

1. - Réceptacle (2) souple pour la culture de plantes, comportant
- une enveloppe (1) souple en matériau imperméable ouverte à sa partie supérieure, laquelle est destinée à recevoir, dans un compartiment inférieur (11), un matériau poreux, et dans un compartiment supérieur (10), un substrat de culture des plantes ;
- une nappe de séparation (8) poreuse, venant séparer les deux compartiments ;
- un moyen d'amenée dans le compartiment inférieur (11) d'une eau de mouillage du substrat, laquelle est destinée à remonter par capillarité le matériau poreux pour venir mouiller le substrat en traversant la nappe de séparation (8), l'eau de mouillage du substrat étant une eau pouvant contenir au moins un nutriment et/ou au moins un engrais ; et
- un moyen d'évacuation de l'eau de mouillage par au moins un orifice (13) de l'enveloppe (1) dans la région du compartiment inférieur,
**caractérisé par le fait qu'**il comporte une poche de passage
d'eau de mouillage, ouverte à son extrémité inférieure, en position d'utilisation, disposée au niveau de l'orifice (13) d'évacuation d'eau de mouillage, sur la partie extérieure du réceptacle (2), afin de permettre l'évacuation de l'eau de mouillage sortant de l'orifice (13) d'évacuation d'eau de mouillage,
une tige (30) étant disposée dans la poche de passage d'eau de mouillage pour éviter que la poche ne reste plaquée contre la paroi du réceptacle (2) en position d'utilisation.

2. - Réceptacle (2) selon la revendication 1, **caractérisé par le fait que** la tige (30) est creuse et laisse passer au moins une partie de l'eau de mouillage sortant de l'orifice (13) d'évacuation d'eau de mouillage.

3. - Réceptacle (2) selon l'une des revendications 1 et 2, **caractérisé par le fait que** la nappe de séparation (8) est solidaire d'au moins une partie de la ou des parois de l'enveloppe (1) du réceptacle (2).

4. - Réceptacle (2) selon l'une des revendications 1 à 3, **caractérisé par le fait que** le moyen d'amenée d'eau de mouillage est un tube (21) dont la première extrémité (22) est accessible par le dessus du réceptacle et dont la seconde extrémité (26) présente un coude (25) qui vient reposer contre le fond du réceptacle (2), le tube (21) étant maintenu par des attaches sur l'enveloppe (1) et/ou par la présence du substrat de culture et du matériau poreux, la diffusion de l'eau en fond du réceptacle pouvant être réalisée à l'aide d'une gaine perforée souple ou d'un répartiteur à plusieurs sorties perforées fixés sur le coude (25) pour maximiser le mouillage des matériaux poreux.

5. - Réceptacle (2) selon l'une des revendications 1 à 4, **caractérisé par le fait qu'**est disposé, au niveau de l'orifice (13) d'évacuation d'eau de mouillage, sur la partie intérieure du réceptacle (2), un dispositif pare-racine et anti-bouchage (18), empêchant les racines des plantes d'obstruer l'orifice (13) d'évacuation d'eau de mouillage.

6. - Réceptacle (2) selon l'une des revendications 1 à 5, **caractérisé par le fait que** le compartiment inférieur (11) comprend deux sous-compartiments séparés par une nappe de séparation (8') poreuse, le premier sous-compartiment (11a) étant situé au-dessous du compartiment supérieur (10), le second sous-compartiment (11b) étant placé entre le premier sous-compartiment (11a) et le fond du réceptacle (2), le matériau poreux présent dans le premier sous-compartiment (11a), ayant une porosité plus faible que le matériau poreux présent dans le second sous-compartiment (11b).

7. - Réceptacle (2) selon l'une des revendications 1 à 6, **caractérisé par le fait que** le réceptacle (2) est de forme parallélépipédique, comprenant une face de fond (1a) rectangulaire se prolongeant sur chacun de ces côtés par quatre faces rectangulaires (1b, 1c, 1d, 1e) que l'on peut joindre de manière étanche deux à deux afin de former le réceptacle (2).

8. - Réceptacle (2) selon l'une des revendications 1 à 7, **caractérisé par le fait que** le matériau imperméable est choisi parmi le poly(chlorure de vinyle), un polyester, un caoutchouc EPDM, un polycarbonate, le polypropylène, le polyéthylène haute densité, le polyéthylène basse densité, le poly(téréphtalate d'éthylène), l'Acrylonitrile-Butadiène-Styrène et un polyamide 6 chargé à 30 % de fibres de verre, un polymère biosourcé, du poly(chlorure de vinyle) de qualité alimentaire, l'enveloppe devant être souple.

9. - Réceptacle selon l'une des revendications 1 à 8, **caractérisé par le fait que** l'enveloppe (1) est équipée de moyens permettant de la soulever en vue de sa manutention lorsqu'elle est remplie, lesdits moyens consistant en au moins une anse, laquelle peut constituer un point de levage pour le passage de la fourche d'un chariot élévateur, lesdits moyens pouvant consister en des sangles fixées le long de la bordure périphérique supérieure de l'enveloppe (1) et formant chacune au-dessus de celle-ci une boucle formant anse.

10. - Réceptacle selon l'une des revendications 1 à 9, **caractérisé par le fait que** l'enveloppe (1) comporte des moyens pour en maintenir le galbe ou pour la rendre autoportante lorsqu'elle est en position de remplissage, lesdits moyens consistant en des parties renforcées de la paroi périphérique de l'enveloppe (1), par exemple des parties renforcées sous forme d'au moins une bande périphérique horizontale de type ceinture, et/ou en éléments écarteurs, par exemple sous forme de bandes de matière réunissant deux parois opposées de l'enveloppe (1), en particulier se situant au-dessus de la nappe de séparation des deux compartiments de l'enveloppe.

11. - Ensemble pour la culture de plantes comprenant un réceptacle (2) tel que défini à l'une des revendications 1 à 10, et un environnement de réception apte à recevoir le réceptacle en position d'utilisation, le réceptacle possédant sur sa partie extérieure au voisinage de ses bordures supérieures en position d'utilisation, des moyens de fixation du réceptacle à l'environnement de réception.

12. - Ensemble selon la revendication 11, **caractérisé par le fait que** l'environnement de réception est un bac à plantes (5) comprenant au moins une ouverture (29) dans sa paroi de fond en position d'utilisation pour évacuer l'eau de mouillage sortant de l'orifice (13) d'évacuation d'eau de mouillage.

13. - Ensemble selon la revendication 11, **caractérisé par le fait que** l'environnement de réception est une jardinière sans fond, un carré potager sans fond, une toiture-terrasse, un espace sans fond entre bordures en accompagnement de voirie, des massifs en pleine terre, des massifs urbains hors sols, des cultures agricoles ou maraîchères en pleine terre.

14. - Ensemble selon l'une des revendications 11 à 13, **caractérisé par le fait que** les moyens de fixation sont des bandes adhésives (4), des agrafes ou des pointes.

## Patentansprüche

1. - Flexibler Behälter (2) für den Anbau von Pflanzen, bestehend aus :
- eine biegsame, nach oben offene Hülle (1) aus undurchlässigem Material, die dazu bestimmt ist, in einem unteren Fach (11) ein poröses Material und in einem oberen Fach (10) ein Substrat für den Anbau von Pflanzen aufzunehmen;
- ein poröses Trennblatt (8), das die beiden Kammern voneinander trennt;
- ein Mittel zum Zuführen eines Substratbefeuchtungswassers in das untere Abteil (11), das dazu bestimmt ist, durch Kapillarwirkung das poröse Material aufsteigen zu lassen, um das Substrat zu befeuchten, indem es die Trennfolie (8) passiert, wobei das Substratbefeuchtungswasser ein Wasser ist, das mindestens einen Nährstoff und/oder mindestens ein Düngemittel enthalten kann; und
- ein Mittel zum Ablassen von Befeuchtungswasser durch mindestens eine Öffnung (13) im Gehäuse (1) im Bereich des unteren Abteils,
**gekennzeichnet durch** die Tatsache, dass es umfasst
eine in der Gebrauchsstellung an ihrem unteren Ende offene Befeuchtungswasser-Durchgangstasche, die an der Befeuchtungswasser-Auslassöffnung (13) am äußeren Teil des Behälters (2) angeordnet ist, um das Auslassen von Befeuchtungswasser aus der Befeuchtungswasser-Auslassöffnung (13) zu ermöglichen,
eine Stange (30), die in der Befeuchtungswasserdurchgangstasche angeordnet ist, um zu verhindern, dass die Tasche in der Gebrauchsposition gegen die Wand des Behälters (2) gedrückt wird.

2. - Behälter (2) nach Anspruch 1, **dadurch gekennzeichnet, dass** die Stange (30) hohl ist und zumindest einen Teil des Befeuchtungswassers aus der Befeuchtungswasser-Auslassöffnung (13) austreten lässt.

3. - Behälter (2) nach einem der Ansprüche 1 und 2, **dadurch gekennzeichnet, dass** die Trennfolie (8) mit mindestens einem Teil der Wand oder der Wände des Gehäuses (1) des Behälters (2) fest verbunden ist.

4. - Behälter (2) nach einem der Ansprüche 1 bis 3, **dadurch gekennzeichnet, dass** das Mittel zum Zuführen von Befeuchtungswasser ein Rohr (21) ist, dessen erstes Ende (22) von der Oberseite des Behälters her zugänglich ist und dessen zweites Ende (26) einen Krümmer (25) aufweist, der am Boden des Behälters (2) anliegt, wobei das Rohr (21) durch Befestigungen an der Hülle (1) und/oder durch das Vorhandensein des Substrats für den Anbau und des porösen Materials gehalten wird, wobei die Diffusion des Wassers am Boden des Behälters mit Hilfe eines flexiblen perforierten Mantels oder eines Verteilers mit mehreren perforierten Auslässen, die am Krümmer (25) befestigt sind, durchgeführt werden kann, um die Befeuchtung der porösen Materialien zu maximieren.

5. - Behälter (2) nach einem der Ansprüche 1 bis 4, **dadurch gekennzeichnet, dass** im Bereich der Befeuchtungswasseraustrittsöffnung (13) am Innenteil des Behälter (2) eine Wurzelsperre und Antiblockiereinrichtung (18) angeordnet ist, die verhindert, dass die Wurzeln der Pflanzen die Befeuchtungswasseraustrittsöffnung (13) verstopfen.

6. - Behälter (2) nach einem der Ansprüche 1 bis 5, **dadurch gekennzeichnet, dass** das untere Fach (11) aus zwei durch eine poröse Trennfolie (8') getrennten Teilfächern besteht, wobei das erste Teilfach (11a) unterhalb des oberen Fachs (10) angeordnet ist, das zweite Teilfach (11b) zwischen dem ersten Teilfach (11a) und dem Boden des Behälters (2) angeordnet ist, wobei das in dem ersten Teilfach (11a) vorhandene poröse Material eine geringere Porosität aufweist als das in dem zweiten Teilfach (11b) vorhandene poröse Material.

7. - Behälter (2) nach einem der Ansprüche 1 bis 6, **dadurch gekennzeichnet, dass** der Behälter (2) eine parallelepipedische Form aufweist, die eine rechteckige Bodenfläche (1a) umfasst, die an jeder ihrer Seiten durch vier rechteckige Flächen (1b, 1c, 1d, 1e) verlängert ist, die paarweise dicht zusammengefügt werden können, um den Behälter (2) zu bilden.

8. - Behälter (2) nach einem der Ansprüche 1 bis 7, **dadurch gekennzeichnet, dass** das undurchlässige Material ausgewählt ist aus Polyvinylchlorid, Polyester, EPDM-Kautschuk, Polycarbonat, Polypropylen, Polyethylen hoher Dichte, Polyethylen niedriger Dichte, Polyethylenterephthalat, Acrylnitril-Butadien-Styrol und ein zu 30 % mit Glasfasern gefülltes Polyamid 6, ein biobasiertes Polymer, Polyvinylchlorid in Lebensmittelqualität, wobei das Gehäuse flexibel ist.

9. - Behälter nach einem der Ansprüche 1 bis 8, **dadurch gekennzeichnet, dass** die Hülle (1) mit Mitteln ausgestattet ist, die es ermöglichen, ihn im gefüllten Zustand zu Handhabungszwecken anzuheben, wobei die Mittel aus mindestens einem Griff bestehen, der einen Hebepunkt für den Durchgang der Gabel eines Gabelstaplers bilden kann, wobei die Mittel gegebenenfalls aus Bändern bestehen, die entlang des oberen Umfangsrandes der Hülle (1) befestigt sind und jeweils eine Schlaufe oberhalb des letzteren bilden, die einen Griff bildet.

10. - Behälter nach einem der Ansprüche 1 bis 9, **dadurch gekennzeichnet, dass** die Hülle (1) Mittel umfasst, um ihre Krümmung aufrechtzuerhalten oder sie selbsttragend zu machen, wenn sie sich in der Füllposition befindet, wobei diese Mittel aus verstärkten Teilen der Umfangswand der Hülle (1) bestehen, z. B. verstärkte Teile in Form von mindestens einem horizontalen gürtelartigen Randstreifen und/oder Abstandselemente, z. B. in Form von Materialstreifen, die zwei gegenüberliegende Wände der Hülle (1) verbinden, insbesondere oberhalb des Trennblattes der beiden Fächer der Hülle.

11. - Anordnung für den Anbau von Pflanzen, mit einem Behälter (2) nach einem der Ansprüche 1 bis 10 und einer Aufnahmeumgebung, die zur Aufnahme des Behälters in der Gebrauchsposition geeignet ist, wobei der Behälter an seiner Außenseite in der Nähe seiner oberen Kanten in der Gebrauchsposition Mittel zur Befestigung des Behälters an der Aufnahmeumgebung aufweist.

12. - Anordnung nach Anspruch 11, **dadurch gekennzeichnet, dass** die Aufnahmeumgebung ein Pflanzenbehälter (5) ist, der in seiner Bodenwand in der Gebrauchsstellung mindestens eine Öffnung (29) zum Auslassen des aus der Befeuchtungswasser-Auslassöffnung (13) austretenden Befeuchtungswassers aufweist.

13. - Anordnung nach Anspruch 11, **dadurch gekennzeichnet, dass** die Aufnahmeumgebung ein bodenloser Pflanzkübel, ein bodenloser Gemüsegarten, eine Dachterrasse, ein bodenloser Raum zwischen straßenbegleitenden Beeten, offenen Bodenbeeten, oberirdischen städtischen Beeten, offenen landwirtschaftlichen oder gärtnerischen Kulturen ist.

14. - Anordnung nach einem der Ansprüche 11 bis 13, **dadurch gekennzeichnet, dass** die Befestigungsmittel Klebestreifen (4), Klammern oder Spikes sind.

## Claims

1. - Flexible container (2) for growing plants, comprising :
- a flexible casing (1) of impermeable material open at the top, which is intended to receive, in a lower compartment (11), a porous material, and in an upper compartment (10), a substrate for growing plants;
- a porous separating sheet (8) separating the two compartments;
- a means for supplying to the lower compartment (11) a substrate wetting water which is intended to rise up the porous material by capillary action to wet the substrate by passing through the separating sheet (8), the substrate wetting water being a water which may contain at least one nutrient and/or at least one fertiliser; and
- a means of discharging the wetting water through at least one opening (13) in the casing (1) in the region of the lower compartment,
**characterised by** the fact that it includes
a wetting water passage pocket, open at its lower end, in the position of use, disposed at the wetting water discharge port (13) on the outer part of the container (2), to allow the discharge of wetting water from the wetting water discharge port (13),
a rod (30) being arranged in the wetting water passage pocket to prevent the pocket from being pressed against the wall of the container (2) in the position of use.

2. - Container (2) according to claim 1, **characterised by** the fact that the rod (30) is hollow and allows to pass at least some of the wetting water which comes out of the wetting water discharge orifice (13).

3. - Container (2) according to one of claims 1 and 2, **characterised by** the fact that the separating sheet (8) is firmly attached to at least a part of the wall or walls of the casing (1) of the container (2).

4. - Container (2) according to one of claims 1 to 3, **characterized in that** the means for supplying wetting water is a tube (21), the first end (22) of which is accessible from the top of the container and the second end (26) of which has a bent part (25) which rests against the bottom of the container (2), the tube (21) being held by fasteners on the casing (1) and/or by the presence of the culture substrate and the porous material, the diffusion of the water at the bottom of the container being able to be carried out using a flexible perforated sheath or a distributor with several perforated outlets fixed to the bent part (25) to maximise the wetting of the porous materials.

5. - Container (2) according to one of claims 1 to 4, **characterized in that** a root barrier and anti-blocking device (18) is arranged in the region of the wetting water discharge orifice (13) on the inner part of the container (2), preventing the roots of the plants from plugging up the wetting water discharge orifice (13).

6. - Container (2) according to one of claims 1 to 5, **characterized by** the fact that the lower compartment (11) comprises two sub-compartments separated by a porous separating sheet (8'), the first sub-compartment (11a) being located below the upper compartment (10), the second sub-compartment (11b) being located between the first sub-compartment (11a) and the bottom of the container (2), the porous material present in the first sub-compartment (11a) having a lower porosity than the porous material present in the second sub-compartment (11b).

7. - Container (2) according to one of claims 1 to 6, **characterised by** the fact that the container (2) is parallelepipedic in shape, comprising a rectangular bottom face (1a) extended on each of its sides by four rectangular faces (1b, 1c, 1d, 1e) which can be joined in a sealed manner two by two in order to form the container (2).

8. - Container (2) according to one of claims 1 to 7, **characterised in that** the impermeable material is selected from polyvinyl chloride, polyester, EPDM rubber, polycarbonate, polypropylene, high density polyethylene, low density polyethylene, polyethylene terephthalate, Acrylonitrile-Butadiene-Styrene and a 30% glass-fibre filled polyamide 6, a biobased polymer, food grade polyvinyl chloride, the casing being flexible.

9. - Container according to one of claims 1 to 8, **characterized in that** the casing (1) is equipped with means enabling it to be lifted for handling purposes when it is filled, the said means consisting of at least one handle, which can constitute a lifting point for the passage of the fork of a fork-lift truck, the said means possibly consisting of straps fixed along the upper peripheral edge of the casing (1) and each forming a loop above the latter, which forms a handle.

10. - Container according to one of claims 1 to 9, **characterized in that** the casing (1) comprises means for maintaining its curvature or for making it self-supporting when it is in the filling position, said means consisting of reinforced parts of the peripheral wall of the casing (1), for example reinforced parts in the form of at least one horizontal belt-like peripheral strip, and/or spacer elements, for example in the form of strips of material joining two opposite walls of the casing (1), in particular located above the separating sheet of the two compartments of the casing.

11. - A plant growing assembly comprising a container (2) as defined in any one of claims 1 to 10, and a receiving environment adapted to receive the container in the position of use, the container having on its exterior in the vicinity of its upper edges in the position of use, means for securing the container to the receiving environment.

12. - Assembly according to claim 11, **characterized by** the fact that the receiving environment is a plant pot (5) comprising at least one opening (29) in its bottom wall in the position of use for discharging the wetting water coming out of the wetting water discharge opening (13).

13. - Assembly according to claim 11, **characterised by** the fact that the receiving environment is a bottomless planter, a bottomless vegetable garden, a roof terrace, a bottomless space between borders accompanying the road, open-ground beds, above-ground urban beds, open-ground agricultural or market garden crops.

14. - Assembly according to one of claims 11 to 13, **characterised by** the fact that the fixing means are adhesive strips (4), staples or spikes.
